# EUROPEAN PATENT APPLICATION

(11) **EP 2 846 552 A1**
(43) Date of publication of application: **11.03.2015**
(21) Application number: 13290214.9
(22) Date of filing: 10.09.2013
(51) Int. Cl.: H04N 21/258, G06F 17/30, H04W 4/02, H04L 29/08, H04L 29/12

(54) **Delivery of digital content to communication devices in a geographical location**

(71) Applicant: ALCATEL LUCENT, 92100 Boulogne-Billancourt (FR)
(72) Inventor: Vanderhulst, Geert, 2018 Antwerpen (BE)
(74) Representative: Plas, Axel Ivo Michel

(57) **Abstract**

For the provision of digital content to communication devices (11) in a selected geographical location (9), a method and server platform (1) is proposed. The communication devices (11) are connectable to one or more network cells (5). The method comprises several steps. In a first step, selected network cells (10) are selected from the network cells (5) where each one of the selected network cells (5) covers a geographical area partially or completely covering the selected geographical location (9). In a second step, the content is stored on the server platform (1). In a final step, the content is made downloadable from the server platform only over the selected network cells (10) to communication devices (11) connected to the selected network cells (10).

## Description

### Field of the Invention

The present invention generally relates to location-based services, more particularly to the provision of digital content to users situated in a certain geographical location. Digital content refers to any digital representation of data that may be transferred over a data network, such as for example a text message, a media fragment, a document or a (non-)compiled computer program.

### Background of the Invention

In a location-based service, digital content is provided to a user or a communication device associated with a user based on the location of the user. It may also be desirable to limit the provision of the content in time such that the content is only available to users within a certain geographical area and for a limited time period. Different implementations of location-based services exist.

One group of location-based services operate with digital content that is publicly available on the Internet. This content is then annotated with a location in order to restrict the content to that specific location. When a user requests this content related to her current location, a query is executed to the content provider whereby the location of the user is embedded in the query. The user then receives the content annotated with a location covering the location in the query. This approach is often used in social network services, for example by Facebook as described in US7809805.

A disadvantage of these location-based services is that they rely on an implicit trust relationship between the user and content provider: the provider trusts the user in being honest about his whereabouts and serves data corresponding to the claimed geographical location of the user. However, it is easy to cheat by passing false location coordinates to the system distributing the content. This is a serious security threat for location-based services for which users have an incentive to lie. Solutions to this problem are discussed in "Enabling New Mobile Applications with Location Proofs" by Stefan Saroiu and Alec Wolman published in "Proceedings of the 10th workshop on Mobile Computing Systems and Applications" in 2009 and in "APPLAUS: a Privacy-Preserving Location Proof Updating System for Location-based Services" by Zhichao Zhu and Guohong Cao published in "Proceedings of the 30th International Conference on Computer Communications" in 2011. However, both of these solutions still rely on other users or witnesses to confirm a location or a dedicated setup.

Another group of location-based services is concerned with the delivery of specific content to mobile devices by messaging, for example by SMS and MMS where a user receives a message when entering a certain mobile network cell. A disadvantage of this is that these services are limited to messaging, i.e. a mobile user only receives a message once when entering the network cell.

### Summary of the Invention

It is an object of the present invention to overcome these disadvantages by, in a first aspect, a method for providing digital content to communication devices in a selected geographical location. The communication devices are connectable to one or more network cells. The method comprises several steps. In a first step, selected network cells are selected from the network cells. Each one of the selected network cells covers a geographical area which partially or completely covers the selected geographical location. In a second step, the content is stored on a server. In a third step, the content is made downloadable from the server only over the selected network cells to communication devices connected to the selected network cells.

A geographical location is not limited to coordinates on a map, but may be anything that represents a geographical location such as for example a street name, location name, a geographical shape defined by polygons and/or polylines or a single location point together with a radius around that point. This geographical location may be received from a content provider together with the content he wishes to provide within the geographical location.

The network cells refer to the cells of a communication network where each cell comprises an antenna covering a certain area. Communication devices within this area can then connect via the antenna to the communication network. The communication network may then give further access to the internet or a local area network. The network cells may for example be WiFi cells or cellular network cells offering data connection via GSM-EDGE, 3G, 3.5G, 4G or any other cellular technology. Using these technologies the digital content can be downloaded or streamed by the communication device from the server. Typical communication devices are GSMs, smartphones, laptop or desktop computers and tablets equipped with the above communication technology to connect to the network cells.

Advantageously, the network cells cover a small area as this allows to define the geographic location better. For this purpose the network cells may be WiFi cells or cellular cells covering a small areas such as for example femtocells or picocells.

The selecting of the selected network cells may be performed at the time the content is provided to the server, i.e. when the content is stored on the server. This allows to select the cells in a static way as it is assumed that the location of the cells is fixed or that the cell is active or accessible when the content is stored on the server.

The selecting of the selected network cells may also be performed dynamically when the content is requested by a network cell. After this request, the requesting cell is selected as a selected network cell if it covers partially or completely the geographic location. Then, the content is made downloadable to this selected network cell.

It is an advantage that the content is restricted to the selected network cells, as it enables a location-based service where the communication device does not have to retrieve his geographical position. The access to the content is restricted by the communication network the communication device is connected to as the content can only be accessed from the selected network cells. Even if a user would give a Uniform Resource Locator (URL) referring to the digital content to a second user who is not connected to one of the selected network cells, the second user would not be able to download or stream the content to his communication device as he is not connected to one of the selected network cells.

Typically the method will be performed by a party having access to information about the network cells and able to restrict the content to the selected network cells. This party may be the network operator operating the network cells offering the location-based service as a service to content providers. When content is to be made available to a specific geographical location, the network operator may receive the content and the geographical location from the content provider and store it on a server or server platform of the network operator.

Optionally the digital content is associated with a duration. The making of the content downloadable is then only performed during this duration.

A content provider may thus assign a limitation in time apart from the limitation in space by the geographical location. The duration may then be received from the content provider with the geographical location and the digital content. This duration may be a single time interval such as for example June 8, 4 pm till 6 pm or Saturday morning. The duration may also be a repeating time interval such as for example every Saturday morning or every working day from 10 am till 11 am. This thus allows to restrict the content in time in an easy and straightforward manner.

According to an embodiment of the invention, the server is a web server hosting the digital content. The making the content downloadable then comprises making the web server only accessible via the selected network cells.

The advantage of using a web server is that it offers an easy way to make the content available through the use of Uniform Resource Locators or URLs. This way, the content may be downloaded or streamed to the communication devices. Moreover, the URLs to the content may be non-public and only revealed on web pages accessible by the selected network cells.

When using a web server, the communication devices may be served a landing web page when connecting to the selected network cells where the landing web page is specific for each network cell. The making the content downloadable then comprises putting the digital content or a link to the digital content on this landing web page.

A landing web page is a web page where a communication device equipped with a browser application is automatically directed to when connecting to a network cell. For example, when the network cell is a WiFi hotspot, the communication device and thus the user will be redirected to a dedicated webpage provided by the network provider. This page may be used to ask the user for a login and password or a payment in order to use the hotspot. In the case the content is a piece of text, it may be directly published on this landing page. In the case the content is a media item such as an audio or video stream, a link to the content may be provided on the landing page or the stream may be playable from an embedded media player in the web page.

It is an advantage that, by the use of the landing page, it is made sure that the user of the communication device is made aware of content or the availability of the content.

According to an alternative embodiment, the making the content downloadable comprises offering the digital content to at least one communication device connected to the selected network cells through an application installed on the communication device.

Such an application, commonly referred to as an "app" or "mobile app" may be a software application designed to run on smartphones, tablet computers and other mobile devices. They are usually available through application distribution platforms, which are typically operated by the owner of the mobile operating system running on the communication device. This application may then be provided by the party operating the location-based service, for example the network operator of the network cells.

The use of an application allows to deliver or offer the content in a direct way, i.e. the user may be directly informed about the content without having to open a web browser.

The method according to the invention may further comprise the receiving of the digital content and geographical location by email from a content provider. This email then comprises a destination address and the geographical location embedded within the destination address and/or within the email itself.

This allows an easy way to deliver location-based content to a geographical location by a content provider as for the content provider the delivery is as simple as sending an email. The provider of the location-based service may then offer a set of email addresses to address different locations such as for example "streetname@locationservice,org" or "publicplace@locationservice.org" to refer respectively to a street or public place as geographical location.

In a second aspect, the invention also relates to a server platform for providing digital content to communication devices in a selected geographical location. The communication devices being connectable to one or more network cells. The server platform being adapted to selecting selected network cells from the network cells. Each one of the selected network cells covering a geographical area partially or completely covering the selected geographical location. The server platform further adapted to store the content and make the content downloadable only over the selected network cells to communication devices connected to the selected network cells.

The server platform may further be adapted to perform the method according to embodiments of the first aspect of the invention.

### Brief Description of the Drawings

Fig. 1 illustrates a server platform interacting with a communication network and content provider according to an embodiment of the invention;

Fig. 2 shows a flow diagram illustrating the method according to a first aspect of the invention;

Fig. 3 illustrates a server platform according to an embodiment of the second aspect of the invention; and

Fig. 4 illustrates an alternative flow diagram illustrating the method according to a first aspect of the invention.

### Detailed Description of Embodiment(s)

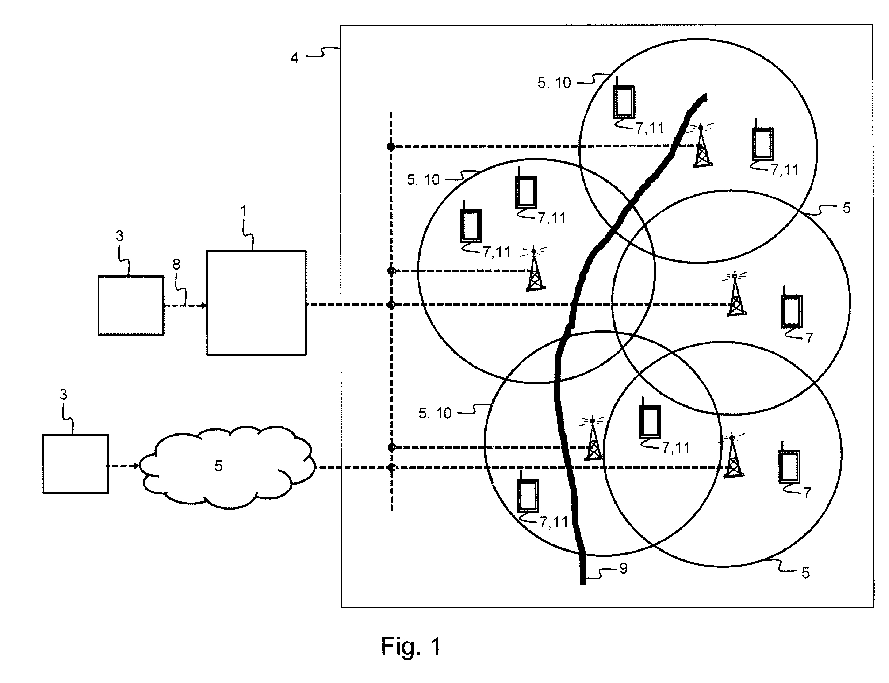

Fig. 1 illustrates a server platform 1 adapted according to an embodiment of the invention. Server platform 1 is operated by a network provider offering a location-based service to content providers 3 over the internet 5 or directly connected 8 to the server platform. The network operator also operates a wireless communication network 4 comprising network cells 5. The wireless communication network may comprise WiFi cells as network cells accessible through WiFi access points, each access point covering an area 6. Communication devices 7 inside this area equipped with WiFi capabilities may then connect with such an access point. Similar to the WiFi cells, the communication network may also comprise cellular cells as network cells where a base station defines a cell by the area it covers. Communication devices 7 in this area can then connect to this base station. The wireless communication network 4 is connected to the server platform 1 and may be further connected to the internet 5 offering internet access to communication devices 7 connected to the wireless communication network 4.

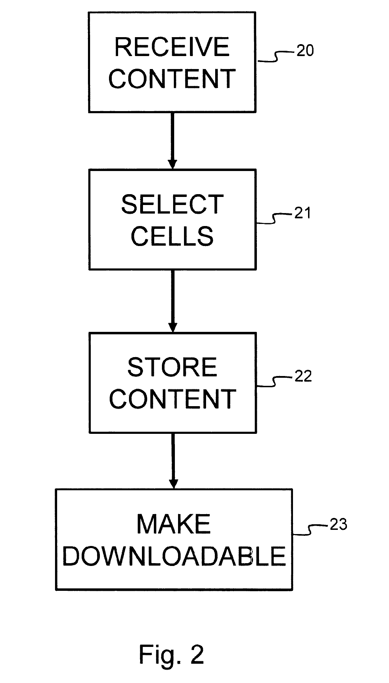

Fig.2 shows a flow diagram illustrating the general operation of the server platform as a location-based service and thus how to provide content to a communication devices 7 located in a certain geographical location. In a first step 20, the platform 1 receives the content from the content provider 3 together with a geographical location 9 and, optionally, with a duration. The geographical location 9 specifies the location where the content should be made available. If the content is only to be made available for a certain duration, this is also specified. In a second step 21, the server platform selects the network cells 10 which cover the geographical location 9 completely or partially. Optionally, also cells close to the geographical location 9 may be selected. Then, in a next step 22, the server platform 1 stores the content on the server together with a reference to the cells that were selected. In a last step 23, the server platform 1 makes the content downloadable from the platform server but only over the network cells 10 that were selected. This way, only communication devices 11 that connect to a selected cell 10 are able to download and thus consume the content from the platform server.

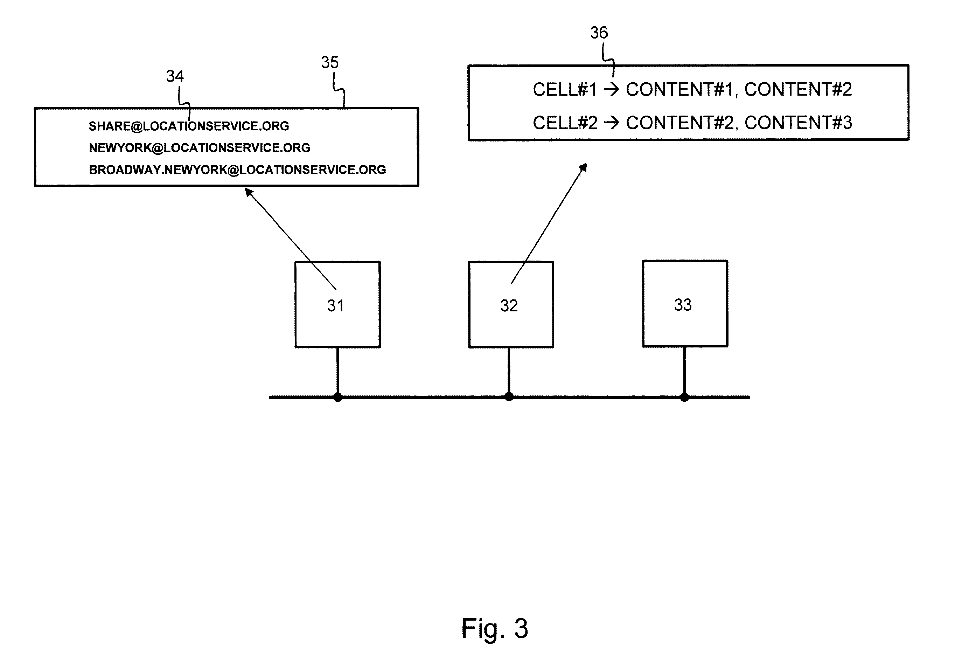

According to an embodiment of the invention, the server platform 1 may comprise a mail server module 31 as illustrated in Fig. 3. The module is configured such that it can receive a mail that is sent to a specific email address 34 such as for example SHARE@LOCATIONSERVICE.ORG. The geographical location, i.e. where to share the information from the email, is then included in the mail header. The geographical location may for example be specified as "Broadway, New York, USA". For popular destinations, aliases may be defined such as NEWYORK@LOCATIONSERVICE.ORG. These aliases may also be further specified in a hierarchical fashion, for example as BROADWAY@LOCATIONSERVICE.ORG.

Optionally, also a temporal identifier in the form of a duration may be specified in the header of the email indicating when and/or how long the content may be provided. An example of such a temporal identifier is "August 20, 2013, between 5 pm and 6 pm".

In the first step 20, the module 31 then receives an email from a content provider 3 addressed to one or more of the email addresses in the list 35. The content may then be embedded in the body of the email as a text message, but the content may also be added to the email as an attachment or a link to the content may be provided. Using the mail module 31, the server platform 1 may thus receive the geographic location, duration and digital content.

Alternative ways may be provided to receive the content, duration and location. The content, location and duration may for example be uploaded to the platform 1 over a file transfer protocol or by using an interactive graphical user interface offered by the server platform.

The step 22 of storing the content and selected cells may be done by a web server 33 and relational database 32 comprised in the server platform as also illustrated in Fig 3. A reference 36 to the content is then added to the database 32 linking the content with the network cells via which the content may be downloaded. together. The content itself is then stored on the web server 33 or any storage means linked with the web server. This way the content may be downloaded from the webserver by using a Unified Resource Locator (URL) to the content.

According to an embodiment of the step 23 of making the content downloadable, this step comprises that the web server is only accessible from communication devices connected to the selected network cells 10. This may be done in the web server itself. In this case, when a request to download content is received by the webserver 33, the webserver checks the cell from where the request originates, for example by checking the cell identification number. The webserver then checks in the database 32 if this cell may access the specific content. If not allowed, the webserver returns an error or warning.

If the content is made downloadable to a communication device 11 connected to a selected cell 10, the content may further be presented to the user of the communication device 11. According to a further embodiment, this may be accomplished by a landing web page. When a communication device is equipped with a web browser application and the web browser application is opened, such a landing web page is forced to be displayed in the web browser application. This type of functionality may be implemented by intercepting all HTTP network traffic, i.e. data traffic initiated by the web browser application, at the cell access point or base station or at the server platform 1 itself and redirecting the web browser application to a web server serving the landing web page. Using this technique a web browser application is redirected to the web server 33 of the server platform 1 and offered a web page comprising the content or links to the content that may be downloaded according to the information 36 in the database 32.

According to an alternative embodiment of the step 23 of making the content downloadable, the content may also be made available to the communication device 11 by an application running on the communication device. This application is then provided by the network provider for example via an app or application store such a Google Play, Apple App Store, BlackBerry App World and the like. The content is then offered to the user via this application. When the communication device 11 connects to a new network cell 10, the application will then retrieve information about the content or the content itself from the server platform 1. Again, the server platform will query the database 32 to retrieve a list of the content that may be downloaded from this new network cell 10.

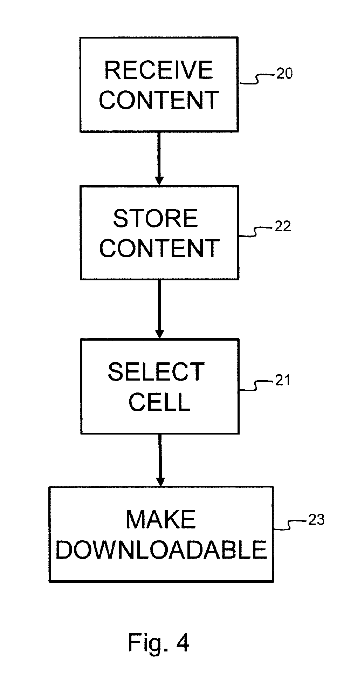

The platform 1 may also perform the steps illustrated by Fig. 2 in an alternative way as illustrated by Fig.4. In this flow, the storing 22 of the content on the platform is performed before the SELECT CELL operation 21. This allows to perform the selecting of the cells more dynamically, i.e. at the time when the content is actually requested. A cell or a communication device connected to a cell may then request content it is allowed to download from the platform 1. At that time, the platform 1 will associate the cell with the content, i.e. select the cell, for example by the database 36, and make the content downloadable by that cell.

The above embodiments will be further clarified by the two following exemplary use cases.

Exemplary use case 1: A water company wants to announce construction works to the inhabitants of street S in the city of Brussels. The water company addresses an email to SHARE@LOCATIONSERVICE.ORG with a description of the construction works, the geographical location being "street s, Brussels" and an expiry date indicating when the message should stop to appear. The email message is then delivered to the mailbox of a network provider operating in Brussels. The message is then associated with each cellular and WiFi cell operated by the network operator and covering fully or partially the targeted street S. People residing in the street or its direct surroundings can discover the message and download it from a server only serving devices connected to the associated cells.

Exemplary use case 2: A festival organizer wants to make camera feeds of a live performance available to the local audience only, i.e. the paying customers visiting the festival. This is valuable for people residing at the camping of the festival or people who want to jump between live performances at different stages. Clearly, security is important here to respect the artists' copyright and trusting one's location is simply not viable in this case. Therefore, the festival organizer leverages local small cells to distribute content to the festival area. The content, streaming video in this case, is then available on the web page of the festival but only to the people in the festival area. Even if links or passwords are shared with remote friends, video streams can only be accessed whilst being connected to a local cell of the festival.

It should be understood that the server platform (1) may not be limited to a single physical server nor to a single location. The webserver (33), database (32) or mail server (31) as part of the server platform (1) may be implemented as services on a single server or on multiple servers within the same location or in different locations connected by a data network. Services implementing the webserver (33), database (32), mail server (31) or other functions of the server platform (1) may also be spread over several physical servers in order to spread the load caused by performing the service. The services may also be performed by other devices. For example, a WiFi access point or cellular base station may also comprise a web server, mail server or database service. In this case, the server platform may serve a single network cell where the serving of the content is done by the access point or base station.

The server platform may also be operated by another party than the network operator or provider operating the wireless communication network (4). This may be done by a separate party that has access to information about the wireless communication network (4) such as the network cells (5), the area covered by the cells and the identification of the cells.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for providing digital content to communication devices (11) in a selected geographical location (9); said communication devices (11) being connectable to one or more network cells (5); said method comprising the following steps:
- selecting (21) selected network cells (10) from said network cells; each one of said selected network cells covering a geographical area partially or completely covering said selected geographical location (9);
- storing (22) said content on a server (1);
- making (23) said content downloadable from said server only over said selected network cells (10) to communication devices (11) connected to said selected network cells.

2. A method according to claim 1 wherein said digital content is associated with a duration; and wherein said making said content downloadable is only performed during said duration.

3. A method according to claim 1 wherein said server is a web server (33) hosting said digital content; and wherein said making said content downloadable comprises making said web server (33) only accessible via said selected network cells (10).

4. A method according to claim 3 wherein communication devices (11) are served a landing web page when connecting to said selected network cells (10); said landing web page being specific for each network cell; and wherein said making said content downloadable comprises putting said digital content or a link to said digital content on said landing web page.

5. A method according to claim 1 wherein said making said content downloadable comprises offering said digital content to at least one communication device connected to said selected network cells through an application installed on said communication device.

6. A method according to claim 1 comprising:
- receiving (20) said digital content and geographical location by email from a content provider; said email comprising a destination address and said geographical location being embedded within said destination address and/or within said email.

7. A server platform (1) for providing digital content to communication devices (11) in a selected geographical location (9); said communication devices being connectable to one or more network cells (5); said server platform being adapted to:
- selecting selected network cells (10) from said network cells (5); each one of said selected network cells covering a geographical area partially or completely covering said selected geographical location (9);
- storing said content;
- making said content downloadable only over said selected network cells to communication devices connected to said selected network cells.
